# EUROPEAN PATENT APPLICATION

(11) **EP 2 688 178 A1**
(43) Date of publication of application: **22.01.2014**
(21) Application number: 11861183.9
(22) Date of filing: 20.12.2011
(51) Int. Cl.: H02J 7/02, H01M 10/42

(54) **COMMUNICATION SYSTEM, AND RECHARGEABLE BATTERY SYSTEM**

(30) Priority: 14.03.2011 JP 2011055703
(71) Applicant: Sanyo Electric Co., Ltd., Osaka 570-8677 (JP)
(72) Inventor: ABE Takayoshi, Moriguchi City Osaka 570-8677 (JP); MATSUMURA Kohji, Moriguchi City Osaka 570-8677 (JP); HARADA Takanori, Moriguchi City Osaka 570-8677 (JP); ASARI Keisuke, Moriguchi City Osaka 570-8677 (JP); YAMAGUCHI Masao, Moriguchi City Osaka 570-8677 (JP)
(74) Representative: Höhfeld, Jochen
(86) International application number: PCT/JP2011/079505
(87) International publication number: WO 2012/124233

(57) **Abstract**

A communication system includes: an assembled battery including a plurality of series connected battery packs having at least one storage battery cell; a battery management section adapted to manage the battery packs; and an optical line connected in daisy chain for use in communication between the battery management section and each of the battery packs.

## Description

### CROSS-REFERENCE TO RELATED APPLICATION

The present application is a continuation application of International Application No. PCT/JP2011/079505, filed December 20, 2011, the entire contents of which is incorporated herein by reference and priority to which is hereby claimed. The PCT/JP2011/079505 application claimed the benefit of the date of the earlier filed Japanese Patent Application No. 2011-055703 filed March 14, 2011, the entire contents of which are incorporated herein by reference, and priority to which is hereby claimed.

### TECHNICAL FIELD

The present invention relates to a communication system and a storage battery system.

### BACKGROUND ART

Some conventional communication systems include a plurality of battery packs having storage battery cells. Such a communication system is disclosed, for example, in Patent Document 1.

In the communication system of Patent Document 1, battery packs are connected in series, each battery pack having a modular battery, which includes a plurality of storage battery cells, and a cell controller. The cell controller transmits detected battery state information to a battery controller via an insulated communication circuit.

### CITATION LIST

### PATENT DOCUMENT

PATENT DOCUMENT 1: Japanese Patent Laid-Open Publication No. 2008-235032 (FIG. 3, et al.)

### SUMMARY OF INVENTION

### TECHNICAL PROBLEM

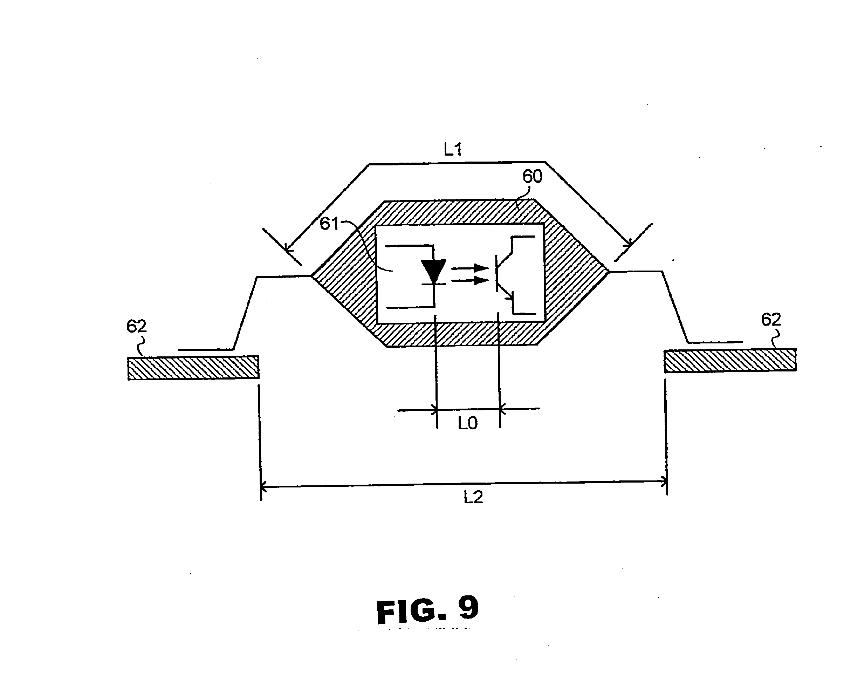

In Patent Document 1 described above, a photo coupler is used for the insulated communication circuit. For the photo coupler for use in insulation, minimum values for insulation distance, creeping distance, and air clearance are specified by various domestic and international safety standards in order to protect user's safety from hazardous high voltage. The insulation distance is a minimum distance between a light emission side and a light receiving side, which are insulated by resin (L0 in FIG. 9). The creeping distance is a minimum distance between a light emission-side terminal and a light receiving-side terminal along a package surface (L1 in FIG. 9). The air clearance is a minimum distance between the light emission-side terminal and the light receiving-side terminal in a space outside a resin portion (L2 in FIG. 9).

In a storage battery system of high voltage as high as 200 V to 600 V that is formed by connecting battery packs in series, a photo coupler can be used for the insulated communication circuit. However, if it is desired to construct a storage battery system of higher voltage as high as 600 V or more by increasing the number of serially-connected battery packs, the photo coupler for insulation is no longer usable, in consideration of conformity to global safety standards.

In view of the above-stated circumstances, an advantage of the present invention is to provide a communication system, which can effectively insulate a communication channel between component devices even in the case of constructing a higher voltage system by series connection of battery packs, and a storage battery system having the same.

### SOLUTION TO PROBLEM

A communication system according to an aspect of the present invention includes: an assembled battery including a plurality of series-connected battery packs having at least one storage battery cell; a battery management section adapted to manage the battery packs; and an optical line connected in daisy chain for use in communication between the battery management section and each of the battery packs.

A communication system according to another aspect of the present invention includes: an assembled battery including a plurality of series-connected battery packs having at least one storage battery cell; a battery management section adapted to manage the battery packs; and an optical line connected in one-to-one relation for use in communication between the battery management section and each of the battery packs.

A communication system according to still another aspect of the present invention includes: an assembled battery including a plurality of series-connected battery packs having at least one storage battery cell; a battery management section adapted to manage the battery packs; an optical line adapted to connect in daisy chain between the battery management section and each of the battery packs for battery data request communication from the battery management section to each of the battery packs; and an optical line adapted to connect in one-to-one relation between the battery management section and each of the battery packs for battery data communication from each of the battery packs to the battery management section.

Moreover, a storage battery system of the present invention includes: a communication system according to any one of the aspects; and a power conversion section connected to an assembled battery included in the communication system.

### ADVANTAGEOUS EFFECTS OF THE INVENTION

According to the present invention, even in the case of constructing a higher voltage system by connecting battery packs in series, effective insulation of a communication channel between component devices can be implemented by use of an optical line for communication.

### BRIEF DESCRIPTION OF DRAWINGS

[FIG. 1] FIG. 1 is a view showing an example overall configuration of a storage battery system according to the present invention.
[FIG. 2] FIG. 2 is a view showing an example configuration of a battery pack according to the present invention.
[FIG. 3] FIG. 3 is a view showing a configuration of a BMU (Battery Management Unit) according to the present invention.
[FIG. 4] FIG. 4 is a view showing a configuration of a first embodiment of a communication system according to the present invention.
[FIG. 5] FIG. 5 is a view showing a configuration of a second embodiment of the communication system according to the present invention.
[FIG. 6] FIG. 6 is a view showing one example of faulty wiring in the second embodiment of the communication system according to the present invention.
[FIG. 7] FIG. 7 is a view showing a configuration of a third embodiment of the communication system according to the present invention.
[FIG. 8] FIG. 8 is a view showing an example of address assignment processing in the third embodiment of the communication system according to the present invention.
[FIG. 9] FIG. 9 is a schematic cross sectional view showing an example of a photo coupler.

### DESCRIPTION OF EMBODIMENTS

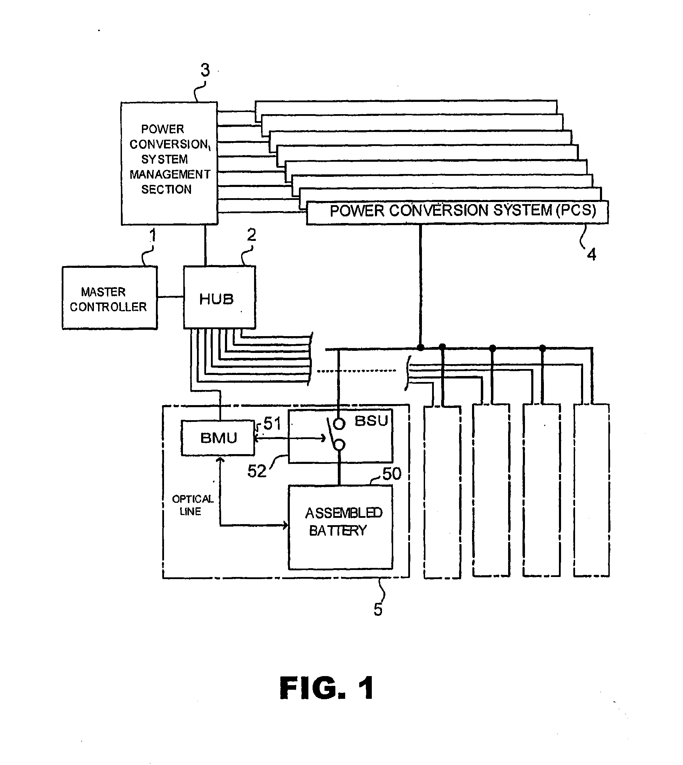

An embodiment of the present invention will be described hereinbelow with reference to the accompanying drawings. An example overall configuration of a storage battery system according to the present invention is shown in FIG. 1. It is to be noted that in FIG. 1, a thin solid line represents a signal line and a thick solid line represents a power line. The storage battery system shown in FIG. 1 includes a master controller 1, a HUB 2, a power conversion system management section 3, a plurality of power conversion systems (PCSs) 4, and a storage battery unit 5.

The power conversion system management section 3 has a function to manage operation of a plurality of the power conversion systems 4 upon reception of charge and discharge control commands from the master controller 1. Every power conversion system 4 has a plurality of assembled batteries 50 connected thereto via power lines. The power conversion system 4 has a function to perform power conversion between an external power source (not shown) and the assembled battery 50 or power conversion between the assembled battery 50 and an external load (not shown), and is made of a converter such as a bidirectional AC/DC converter or a bidirectional DC/DC converter. For example, when the external power source is an external commercial power source, a bidirectional AC/DC converter is used as the power conversion system 4, whereas when the external power source is a solar battery, a bidirectional DC/DC converter is used as the power conversion system 4.

The power conversion system management section 3 has a function to control, based on the charge and discharge control commands, operation of the power conversion systems 4 to perform power management, which is to temporarily store power from the external power source in the assembled batteries 50, and to discharge the stored power to the external load.

Corresponding to one power conversion system 4, a plurality of the storage battery units 5 are provided, and one storage battery unit 5 has an assembled battery 50, a BMU (Battery Management Unit) 51 and a BSU (Battery Switching Unit) 52. The assembled battery 50, which is formed by connecting a plurality of battery packs in series, is a system of high voltage as high as 600 V or more. The BSU 52 is placed between the power conversion system 4 and the assembled battery 50 and is put in a connected state or an opened state under the control of the BMU 51.

The BMU 51 communicates with the assembled battery 50 via an optical line to submit a battery data request to the assembled battery 50 and obtain battery data from the assembled battery 50. When the BMU 51 determines, based on the obtained battery data, that the battery pack has a failure, the BMU 51 puts the BSU 52 in the opened state so that the assembled battery 50 is isolated from the power conversion system 4. The BMU 51 also transmits a failure report together with the battery data to the master controller 1.

It is to be noted that in the configuration of FIG. 1, a plurality of the power conversion systems 4 are controlled by one power conversion system management section 3. However, when the one power conversion system management section 3 has a failure, all the power conversion systems 4 may possibly become uncontrollable. Accordingly, the power conversion system management section 3 may be provided for every power conversion system 4.

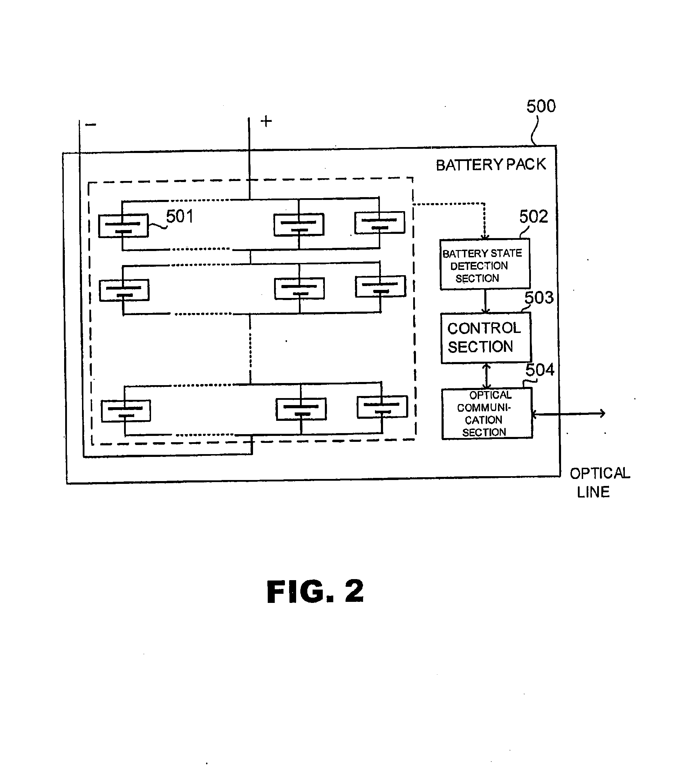

An example configuration of a battery pack 500 that forms the assembled battery 50 is shown in FIG. 2. The battery pack 500 includes a plurality of storage battery cells 501, a battery state detection section 502, a control section 503, and an optical communication section 504. A plurality of the storage battery cells 501, such as lithium ion batteries, are connected in parallel and in series. For example, 24 storage battery cells 501 are connected in parallel, and 13 rows of the cells connected in parallel are connected in series. It is to be noted that the battery pack 500 may have one unit of parallel-connected storage battery cells 501, or may have only a single storage battery cell 501.

The battery state detection section 502 detects a voltage value of each row of the parallel-connected storage batteries 501 and also detects a current value and a voltage value between positive and negative electrodes of the battery pack 500, an SOC (State Of Charge) of the battery pack 500, and the temperature of the battery pack 500. The detected data are outputted to the control section 503. The term "SOC" herein refers to a parameter that is a ratio of dischargeable capacity (residual capacity) to a full charge capacity expressed in percentage. The SOC may be obtained based on an integrated value of charge and discharge current passing through the battery pack 500, and may also be obtained by referring to a formula or table that represents the relationship between a predetermined open circuit voltage (OCV) of the battery pack 500 and the SOC. The control section 503 transmits detected data obtained from the battery state detection section 502 as battery data via the optical communication section 504. The optical communication section 504 is made up of an optical transmitting module and an optical receiving module.

In the case of using optical communication section 504 for an insulating purpose, the communication section cannot obtain driving power from the BMU 51 side, unlike in the case of communication with use of metal, and therefore the driving power of the optical communication section 504 is supplied from the storage battery cell 501.

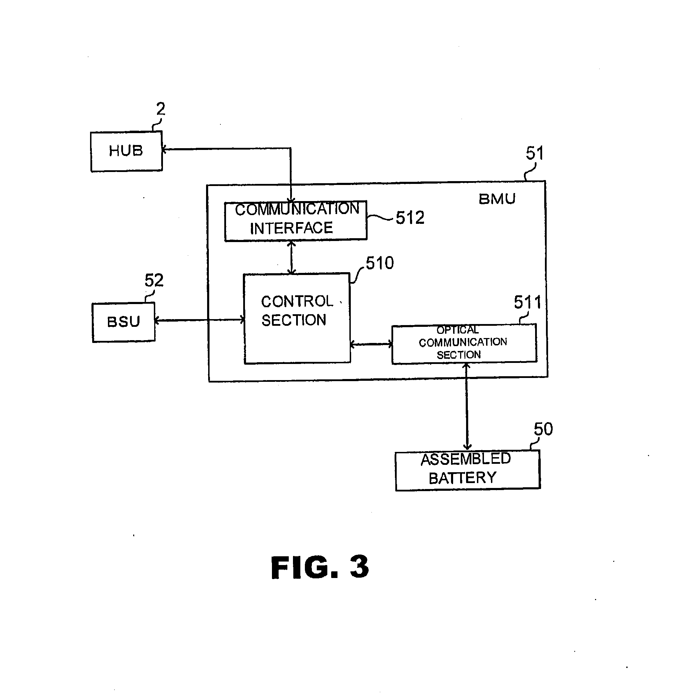

An example configuration of the BMU 51 is shown in FIG. 3. The BMU 51 includes a control section 510, an optical communication section 511, and a communication interface 512. The optical communication section 511 is made up of an optical transmitting module and an optical receiving module. The control section 510 transmits a battery data request command to the assembled battery 50 via the optical communication section 511, and obtains battery data from the assembled battery 50. The control section 510 controls the BSU 52 in connected state or opened state, and also communicates with the master controller 1 (FIG. 1) via the communication interface 512 and the HUB 2.

### <First Embodiment of Communication System>

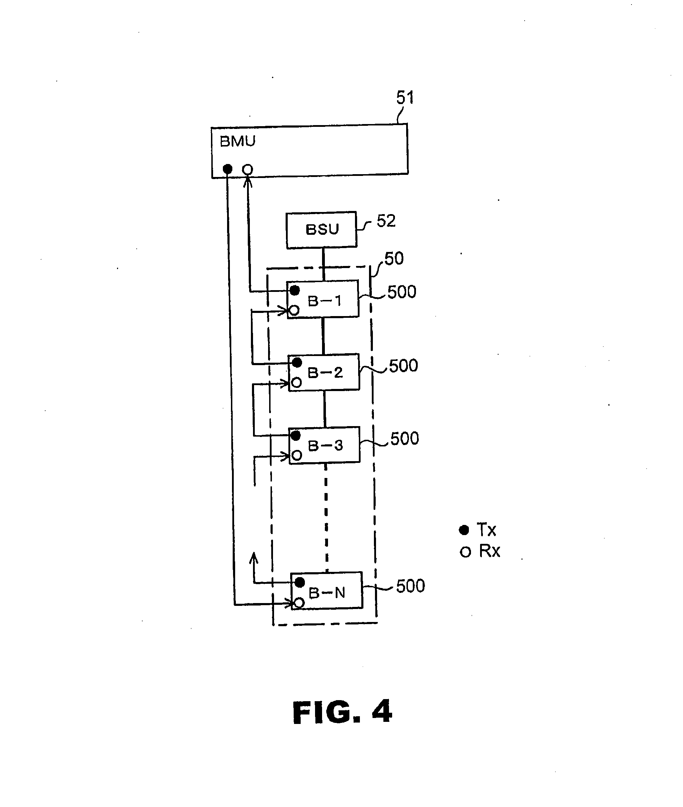

A description is now given of the communication system formed from each of the battery packs 500 and the BMU 51. A configuration of the first embodiment of the communication system is shown in FIG. 4. In FIG. 4, N (N: 2 or more, a natural number) battery packs 500 are serially connected to form an assembled battery 50 (an n-th (n=1-N) battery pack 500 is described as "B-n" in FIG. 4). A first battery pack 500 is connected to the positive side of the BSU 52, an N-th battery pack 500 is connected to the negative side of the BSU 52, and the assembled battery 50 is connected to the power conversion system 4 (FIG. 1) via the BSU 52.

Each battery pack 500 has an optical transmitting module Tx and an optical receiving module Rx. The optical transmitting module Tx transmits data by LED lighting. The optical transmitting module Tx and the optical receiving module Rx in the battery packs adjacent in series connection are connected by an optical fiber. The optical transmitting module Tx included in the BMU 51 is connected to the optical receiving module Rx included in the N-th battery pack 500 via an optical fiber, while the optical transmitting module Tx included in the first battery pack 500 is connected to the optical receiving module Rx included in the BMU 51 via an optical fiber. As a consequence, each of the battery packs 500 and the BMU 51 are connected in daisy chain via the optical fiber.

In battery data communication, the BMU 51 first transmits a battery data request command from the optical transmitting module Tx of the BMU 51 to a certain battery pack 500 that is a transmission destination (the battery data request is sent to each battery pack 500). At this time, an ID number, which is assigned to each battery pack 500 by address assignment processing to be described later, is specified and the battery data request command is transmitted. Upon reception of the battery data request command, the battery pack 500 transfers the battery data request command to a subsequent adjacent battery pack 500. The transfer is sequentially performed in time in the optical communication section 504 (FIG. 2) without the interposition of the control section 503 (FIG. 2). Upon transfer by the first battery pack 500, the BMU 51 receives the transmitted battery data request command. While transferring the battery data request command, the optical communication section 504 (FIG. 2) also outputs the received battery data request command to the control section 503 (FIG. 2) in order to determine whether or not the received battery data request command is addressed to itself.

The battery pack 500, which determined in the control section 503 (FIG. 2) that the battery data request command was addressed to itself, sends a response, which is battery data including its own ID number, to the BMU 51. The response is made by transmitting battery data toward a subsequent adjacent battery pack 500 (transmitting to the BMU 51 in the case of the first battery pack 500) in an interval (e.g., tens of milliseconds) after completion of reception of the battery data request command. The battery data is sequentially transferred in time in the optical communication section 504 (FIG. 2) without the interposition of the control section 503 (FIG. 2). Upon transfer by the first battery pack 500, the BMU 51 can receive the battery data from the respective battery packs 500.

Thus, even when a system of high voltage as high as 600 V or more is constructed by series connection of the battery packs 500, insulation and noise resistance of the communication channel between component devices can be effectively implemented by connecting between the BMU 51 and each of the battery packs 500 with the optical line. Further, since the BMU 51 side needs to have only one communication port because of the daisy chain connection, it becomes possible to flexibly support change in the number of serially-connected battery packs 500.

In the configuration of the present embodiment, address assignment processing for identifying the battery packs 500 is necessary to identify which battery pack 500 is a sender of the battery data. The address assignment processing is performed as shown below at the start of communication.

(Step 1) First, the BMU 51 broadcasts an address setting command to each of the battery packs 500.

(Step 2) Each of the battery packs 500 disables (invalidates) its own optical transmitting module Tx that is connected in daisy chain.

(Step 3) The BMU 51 issues an initial ID number (e.g., "#1").

(Step 4) When the own optical transmitting module Tx is disabled, the battery pack 500 sets a received ID number as its own ID number, enables (validates) the optical transmitting module Tx, and issues to a subsequent, adjacent battery pack 500 an ID number obtained by adding 1 to the own ID number.

(Step 5) When the own optical transmitting module Tx is disabled, the first battery pack 500 sets a received ID number as its own ID number, enables (validates) the optical transmitting module Tx, and issues to the BMU 51 an ID number obtained by adding 1 to the own ID number (=initial value + N). When the BMU 51 receives the ID number issued from the first battery pack 500, the address assignment processing is completed.

While the present embodiment has the above-described effects, it also has the following problems. Firstly, data at the time of transmitting a battery data request command is larger in data amount than data at the time of transmitting battery data. Accordingly, at the time of battery data transmission, a battery pack 500 needs to transmit its own data together with data from all the subsequent battery packs 500. Therefore, LED lighting time for transmission varies among the battery packs 500, which causes disruption in capacity balance among the battery packs 500. In an extreme example of disruption in capacity balance between battery packs, fully-charged battery packs and empty battery packs are mixedly present in a serially-connected battery pack sequence, in which charge is impossible as the fully-charged battery packs cause overcharge while discharge is impossible as the empty battery packs cause over-discharge. As a result, neither discharge nor charge can be performed.

Secondly, the battery pack 500 needs to light LED for transferring the data not addressed to itself, which disadvantageously causes increased power consumption.

### <Second Embodiment of Communication System>

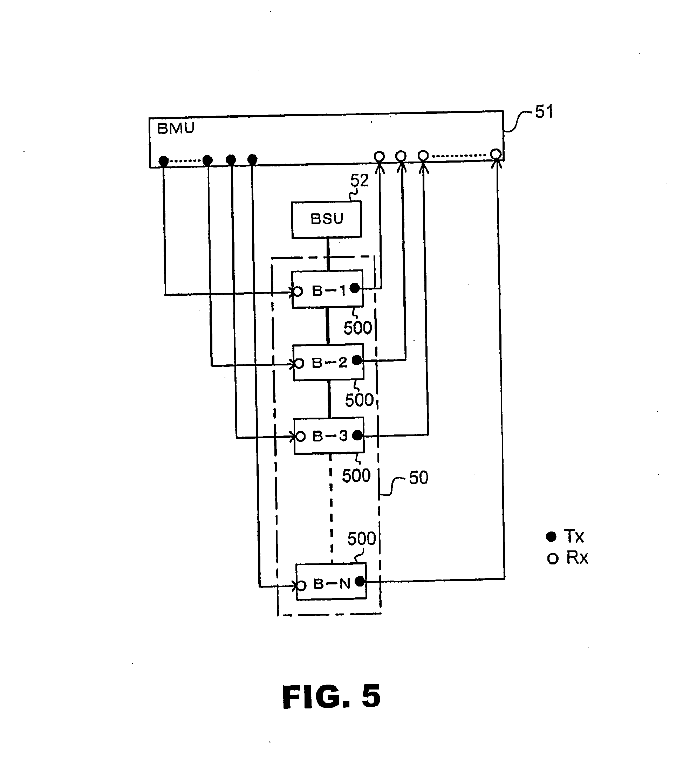

Next, a configuration of a second embodiment of the communication system is shown in FIG. 5. In the configuration shown in FIG. 5, N optical transmitting modules Tx included in the BMU 51 are connected in one-to-one relation to each of optical receiving modules Rx of N battery packs 500 via an optical fiber. Optical transmitting modules Tx of N battery packs 500 are each connected in one-to-one relation to N optical receiving modules Rx included in the BMU 51 via an optical fiber.

In a communication method in such a configuration, a battery data request command is sequentially transmitted from the optical transmitting modules Tx of the BMU 51 to each of the battery packs 500, and each battery pack 500 transmits, upon reception of the battery data request command, battery data from the optical transmitting module Tx to the BMU 51 (that is, the BMU 51 sequentially receives battery data from each of the battery packs 500).

In another communication method, a battery data request command may be simultaneously transmitted from the BMU 51 to all the battery packs 500, and the BMU 51 may receive battery data from all the battery packs 500 in parallel.

In the present embodiment with such a configuration, each of the battery packs 500 can directly communicate with the BMU 51, which makes it possible to suppress variation in LED lighting time among the battery packs 500 and to control disruption in capacity balance among the battery packs 500. Moreover, since the battery pack 500 does not need to transfer the data which are not addressed to itself as in the first embodiment, it becomes possible to cut power consumption. However, the present configuration has such issues as increased reception and transmission ports and increased wiring on the BMU 51 side corresponding to the number of serially-connected battery packs 500.

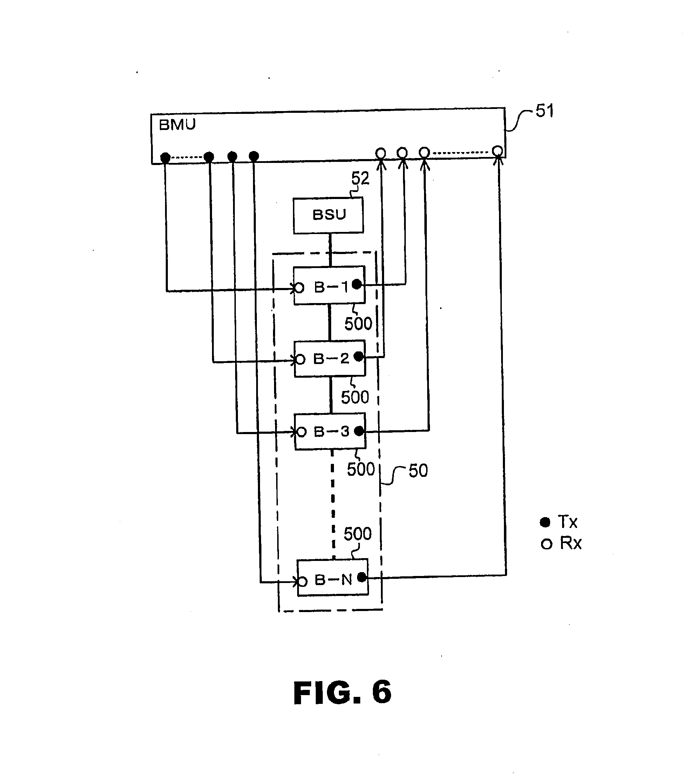

Moreover, in the present configuration, it becomes possible to uniquely identify which battery pack 500 transmits battery data, based on the connection port. However, faulty wiring may occur as shown in FIG. 6 for example, in which the optical transmitting module Tx of the first battery pack 500 is connected to the optical receiving module Rx of the BMU 51 which should originally be connected to the second battery pack 500, and the optical transmitting module Tx of the second battery pack 500 is connected to the optical receiving module Rx of the BMU 51 which should originally be connected to the first battery pack 500. In such a case, there is caused such misidentification that the battery data identified to be from the first battery pack 500 are actually the battery data from the second battery pack 500 and the battery data identified to be from the second battery pack 500 are actually the battery data from the first battery pack 500.

Accordingly, the following address assignment processing may be performed so that the battery packs 500 may be correctly identified. The address assignment processing is performed as shown below at the start of communication.

(Step 1) First, the BMU 51 issues an ID number (e.g., "#1") from the first transmission port (optical transmitting module Tx) to a battery pack 500 (for example, an ID number is issued to the N-th battery pack 500).

(Step 2) The battery pack 500 which received the ID number sets the ID number as its own ID number, and sends a response to the BMU 51.

(Step 3) The BMU 51 issues to a battery pack 500 a next ID number from a next transmission port.

Processing is completed once Steps 3 and 2 are repeated up to the last transmission port. Thus, when address assignment processing is performed, the battery pack 500 transmitting its own ID number to the BMU 51 at the time of battery data transmission allows the BMU 51 to correctly identify which battery pack 500 transmitted the battery data independently of one-to-one wiring between each of N optical receiving modules Rx and N optical transmitting modules Tx included in the BMU 51. However, if faulty wiring occurs in one-to-one wiring between N optical transmitting modules Tx included in the BMU 51 and each of the optical receiving modules Rx of N battery packs 500, misidentification is still caused even when the address assignment processing is performed.

### <Third Embodiment of Communication System>

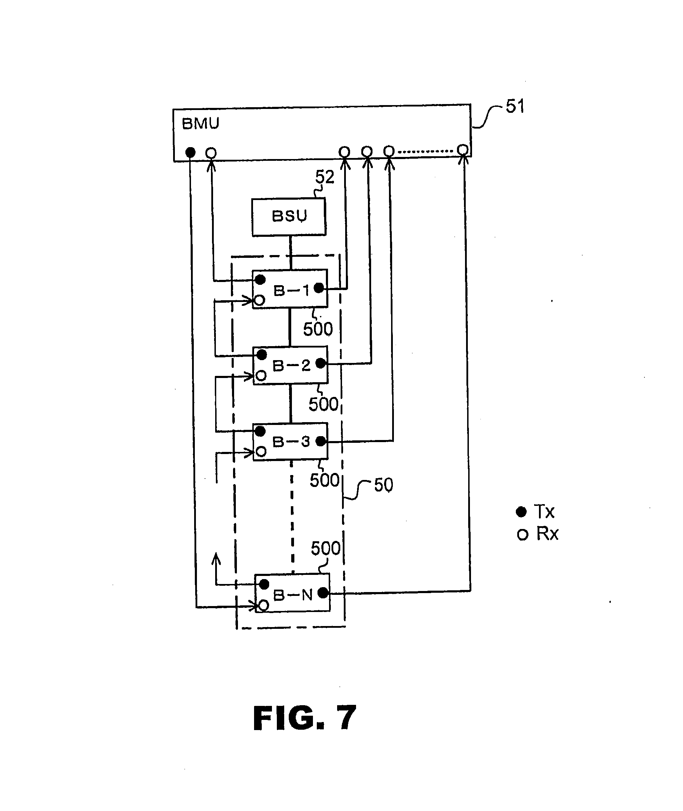

Next, a configuration of a third embodiment of the communication system is shown in FIG. 7. In the configuration shown in FIG. 7, the BMU 51 and each of the battery packs 500 are connected in daisy chain with an optical fiber for battery data request communication, and optical transmitting modules Tx of the respective battery packs 500 are connected in one-to-one relation to N optical receiving modules Rx included in the BMU 51 with an optical fiber.

In a communication method, the BMU 51 first specifies an address for broadcasting from its own optical transmitting module Tx and transmits a battery data request command. A battery pack 500 which received the battery data request command determines that the command is addressed to itself based on the broadcasting address, and transmits battery data from its own optical transmitting module Tx to the BMU 51 while transferring the battery data request command to a subsequent adjacent battery pack 500. In this way, the N-th to second battery pack 500 sequentially transmit battery data to the BMU 51, and the first battery pack 500 which received the transferred battery data request command transmits the battery data from its own optical transmitting module Tx to the BMU 51, while transferring the battery data request command to the BMU 51.

The BMU 51 which received the battery data request command can determine whether or not erroneous data and disconnection of the optical line are present by confirming the battery data request command. It is to be noted that the optical line for transferring the battery data request command from the first battery pack 500 to the BMU 51 is not essential (topology without such an optical line is also included in the daisy chain connection).

According to the present embodiment, combining daisy chain connection and one-to-one connection makes it possible to minimize the increase in the number of communication ports in the BMU 51. Further, broadcasting the battery data request command and transmitting battery data by one-to-one connection make it possible to suppress variation in LED lighting time among the battery packs 500 and to control disruption in capacity balance between the battery packs 500, as well as to reduce power consumption by LED lighting.

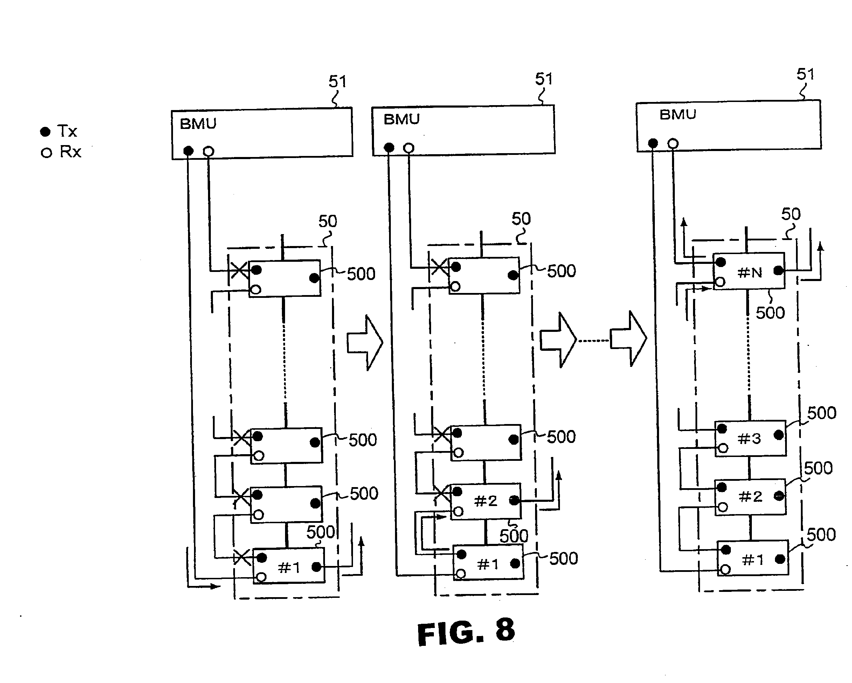

Also in the present configuration, while it is possible to uniquely identify which battery pack 500 transmits battery data based on the connection port, the following address assignment processings may also be performed so that the battery packs 500 can correctly be identified even when there is faulty wiring as described in the second embodiment. The address assignment processing is performed as shown below at the start of communication (see FIG. 8, in which reference symbol x denotes "disable").

(Step 1) First, the BMU 51 broadcasts an address setting command to each of the battery packs 500.

(Step 2) Each of the battery packs 500 disables (invalidates) its own optical transmitting module Tx that is connected in daisy chain.

(Step 3) The BMU 51 issues an initial ID number (e.g., "#1").

(Step 4) When the own optical transmitting module Tx is disabled, the battery pack 500 sets a received ID number as its own ID number, makes a response to the BMU 51 via an optical line for battery data transmission, and enables (validates) the optical transmitting module Tx. The battery pack 500 then issues an ID number obtained by adding 1 to the own ID number to a subsequent adjacent battery pack 500.

(Step 5) When the own optical transmitting module Tx is disabled, the first battery pack 500 sets a received ID number as its own ID number, makes a response to the BMU 51 via an optical line for battery data transmission, and enables (validates) the optical transmitting module Tx. The first battery pack 500 then issues an ID number obtained by adding 1 to the own ID number (= initial value +N) to the BMU 51 via an optical line in daisy chain connection. Once the BMU 51 receives the ID number issued from the first battery pack 500, the address assignment processing is completed.

Thus, when address assignment processing is performed, the battery pack 500 transmitting its own ID number to the BMU 51 at the time of battery data transmission allows the BMU 51 to correctly identify which battery pack 500 transmitted the battery data independently of one-to-one wiring between each of N optical transmitting modules Tx and each of N optical receiving modules Rx included in the BMU 51. Unlike the second embodiment, wiring for battery data request communication is implemented by daisy chain connection of adjacent serially-connected battery packs 500, so that the possibility of faulty wiring is lowered and address assignment processing is effectively operated.

In the foregoing, one embodiment of the present invention has been described, though various modifications of the embodiments are possible within the scope of the present invention.

For example, in the case of forming daisy chain connection in the first and third embodiments, the optical transmitting module Tx of the BMU 51 may be connected to the optical receiving module Rx of the first battery pack 500, the respective battery packs 500 may be connected to each other so that data can be transferred from the first battery pack 500 to the N-th battery pack 500, and the optical transmitting module Tx of the N-th battery pack 500 may be connected to the optical receiving module Rx of the BMU 51. Note that in this case, connection from the N-th battery pack 500 to the BMU 51 is not essential (topology without such connection is also included in the daisy chain connection).

### REFERENCE SYMBOL LIST

- 1: Master controller
- 2: HUB
- 3: Power conversion system management section
- 4: Power conversion system (PCS)
- 5: Storage battery unit
- 50: Assembled battery
- 51: BMU (Battery Management Unit)
- 52: BSU (Battery Switching Unit)
- 60: External resin
- 61: Internal resin
- 62: Solder land
- 500: Battery pack
- 501: Storage battery cell
- 502: Battery state detection section
- 503: Control section
- 504: Optical communication section
- 510: Control section
- 511: Optical communication section
- 512: Communication interface
- Tx: Optical transmitting module
- Rx: Optical receiving module

## Claims

1. A communication system, comprising:
an assembled battery including a plurality of series connected battery packs having at least one storage battery cell;
a battery management section adapted to manage the battery packs; and
an optical line connected in daisy chain for use in communication between the battery management section and each of the battery packs.

2. A communication system, comprising:
an assembled battery including a plurality of series connected battery packs having at least one storage battery cell;
a battery management section adapted to manage the battery packs; and
an optical line connected in one-to-one relation for use in communication between the battery management section and each of the battery packs.

3. A communication system, comprising:
an assembled battery including a plurality of series connected battery packs having at least one storage battery cell;
a battery management section adapted to manage the battery packs;
an optical line adapted to connect in daisy chain between the battery management section and each of the battery packs for battery data request communication from the battery management section to each of the battery packs; and
an optical line adapted to connect in one-to-one relation between the battery management section and each of the battery packs for battery data communication from each of the battery packs to the battery management section.

4. The communication system according to claim 3, wherein
a battery data request command from the battery management section to each of the battery packs is transmitted by broadcasting.

5. A storage battery system, comprising:
a communication system according to any one of claims 1 to 4; and
a power conversion section connected to an assembled battery included in the communication system.
